# EUROPEAN PATENT APPLICATION

(11) **EP 2 557 478 A1**
(43) Date of publication of application: **13.02.2013**
(21) Application number: 11765895.5
(22) Date of filing: 05.04.2011
(51) Int. Cl.: G06F 1/26, H04N 5/00

(54) **PORTABLE INFORMATION DISPLAY TERMINAL**

(30) Priority: 06.04.2010 JP 2010088053
(71) Applicant: Funai Electric Co., Ltd., Daito-shi Osaka 574-0013 (JP)
(72) Inventor: MASAKI, Yasuo, Daito-shi Osaka 574-0013 (JP); KOHNO, Sei, Daito-shi Osaka 574-0013 (JP)
(74) Representative: Grünecker, Kinkeldey, Stockmair & Schwanhäusser
(86) International application number: PCT/JP2011/058572
(87) International publication number: WO 2011/125995

(57) **Abstract**

Disclosed is a portable information display terminal which inhibits from shifting to a standby mode in a state other than a prescribed state in a case of performing control of automatically shifting the portable information display terminal to the standby mode in response to a state of a housing. The portable information, display terminal (1) includes a housing (20), an inclination sensor (53) for detecting that the portable information display terminal has entered a first state or that the portable information display terminal has entered a second state by detecting an inclination of the housing, and a control portions (51, 151) determining and specifying that the portable information display terminal is in the second state and performing control of shifting to a standby mode in a case where it is detected by the inclination sensor that the portable information display terminal is in the second state.

## Description

### Technical Field

The present invention relates to a portable information display terminal, and more particularly, it relates to a portable information display terminal including a housing.

### Background Technique

A portable information display terminal including a housing is known in general. Such a portable information display terminal is disclosed in Japanese Patent Laying-Open No. 2009-139772, for example.

In Japanese Patent Laying-Open No. 2009-139772, there is disclosed a display device (portable information display terminal) including a panel frame (housing) provided with a display portion and a support capable of supporting the panel frame in a state where the panel frame stands on a placing surface. An opening is formed on a surface of the panel frame on a side provided with the display portion, and an illuminance sensor is provided in the opening. According to the aforementioned Japanese Patent Laying-Open No. 2009-139772, the display device is so formed that a display displayed on the display portion is turned off in a case where the illuminance sensor senses no light. Thus, the illuminance sensor does not light in a case where the panel frame is so turned down that the display portion is opposed to the placing surface, whereby the display on the display portion is automatically turned off (standby mode).

### Prior Art

### Patent Document

Patent Document 1: Japanese Patent Laying-Open No. 2009-139772

### Summary of the Invention

### Problem to be Solved by the Invention

In the display device (portable information display terminal) according to Japanese Patent Laying-Open No. 2009-139772, however, it is possible to determine a state where the panel frame (housing) is turned down and a state where the same is not turned down in such an environment that the periphery is bright, while it conceivably becomes difficult to determine the state where the panel frame is turned off and the state where the same is not turned off in such an environment that the periphery is dark. Therefore, there is such a problem that there is a case where the display device shifts to the standby mode also in a state other than the turned-down state depending on the ambient environment (brightness), also in a case where the user wishes to shift the display device to the standby mode only in the turned-down state.

The present invention has been proposed in order to solve the aforementioned problem, and an object of the present invention is to provide a portable information display terminal inhibitable from shifting to a standby mode in a state other than a prescribed state in a case of performing control of automatically shifting the portable information display terminal to the standby mode in response to a state of a housing.

### Means for Solving the Problem and Effects of the Invention

A portable information display terminal according to an aspect of the present invention includes a housing, an inclination sensor for detecting that the portable information display terminal has entered a first state or that the portable information display terminal has entered a second state by detecting an inclination of the housing, and a control portion determining and specifying that the portable information display terminal is in the second state and performing control of shifting to a standby mode in a case where it is detected by the inclination sensor that the portable information display terminal is in the second state.

In the portable information display terminal according to the aspect of the present invention, as hereinabove described, the inclination sensor detecting that the portable information display terminal has entered the first state or that the portable information display terminal has entered the second state by detecting the inclination of the housing is provided, whereby at least two types of states, i.e. the first state and the second state can be detected on the basis of a physical inclination of the housing detected by the inclination sensor without being influenced by the ambient environment (brightness) of the portable information display terminal dissimilarly to a structure employing an illuminance sensor, for example. Thus, the portable information display terminal can be inhibited from shifting to the standby mode in a state (first state) other than the second state in a case where the control portion performs control of automatically shifting the portable information display terminal to the standby mode in the second state.

Preferably in the portable information display terminal according to the aforementioned aspect, the control portion is formed to determine and specify that the portable information display terminal is in the first state and to perform control of not shifting to the standby mode in a case where it is detected by the inclination sensor that the portable information display terminal is in the first state. When forming the portable information display terminal in this manner, the portable information display terminal can be reliably inhibited from shifting to the standby mode in a case where the inclination sensor detects the first state different from the second state.

Preferably, the portable information display terminal according to the aforementioned aspect further includes a display portion displaying information, the second state is a state turning down the portable information display terminal so that the housing and the display portion are opposed to a placing surface, and the control portion is formed to perform control of shifting to the standby mode in a case where it is detected by the inclination sensor that the portable information display terminal is in the state turned down so that the housing and the display portion are opposed to the placing surface. When forming the portable information display terminal in this manner, the user can shift the portable information display terminal to the standby mode by simply turning down the portable information display portion to oppose the housing and the display portion to the placing surface in a case where he/she does not use the portable information display terminal, whereby the portable information display terminal is so shifted to the standby mode that power consumption in the portable information display terminal can be easily reduced.

Preferably in the portable information display terminal according to the aforementioned aspect, the inclination sensor is formed to detect a third state which is a state where the housing is grasped by the user in addition to the first state and the second state, and the control portion is formed to perform control of not shifting to the standby mode in a case where it is detected by the inclination sensor that the portable information display terminal is in the third state where the housing is grasped by the user also in a case where an inclination corresponding to the second state is detected. When forming the portable information display terminal in this manner, the user is generally making use of the portable information display terminal in a case where the portable information display terminal is in the third state where the housing is grasped by the user, whereby the portable information display terminal in use can be prevented from erroneously shifting to the standby mode in a case where the inclination corresponding to the second state is detected in the third state where the housing is grasped by the user.

Preferably, the portable information display terminal in which the aforementioned inclination sensor detects the third state which is the state where the housing is grasped by the user further includes a storage portion storing an inclination angle detected by the inclination sensor, and the control portion is formed to determine and specify that the portable information display terminal is in the first state or the second state and to determine that the portable information display terminal is in the third state where the housing is grasped by the user by comparing an inclination angle, stored in the storage portion, before the attitude of the housing is changed and an inclination angle, stored in the storage portion, after the attitude of the housing is changed with each other. When forming the portable information display terminal in this manner, the control portion can reliably determine and specify the use state of the portable information display terminal on the basis of change in the inclinations angle before and after the attitude of the housing is changed.

Preferably, the portable information display terminal further including the storage portion storing the inclination angle detected by the aforementioned inclination sensor further includes a display portion displaying information, the second state is a state turning down the portable information display terminal so that the housing and the display portion are opposed to a placing surface, and the control portion is formed to determine and specify that the portable information display terminal is in the second state in a case where the inclination angle detected by the inclination sensor does not change with time in a prescribed range. When forming the portable information display terminal in this manner, the control portion can correctly determine and specify the state (second state) where the portable information display terminal is turned down by acquiring temporal change of the inclination angle. Thus, the control portion can reliably perform control of shifting the portable information display terminal to the standby mode in the second state.

Preferably in this case, the control portion is formed to determine that the portable information display terminal is in the third state and to perform control of not shifting to the standby mode in a case where the inclination angle detected by the inclination sensor in an angle range corresponding to the second state changes with time in the prescribed range, also when the inclination angle detected by the inclination sensor is in the angle range corresponding to the second state. When forming the portable information display terminal in this manner, the portable information display terminal in use can be easily prevented from erroneously shifting to the standby mode in a case where the inclination corresponding to the second state is detected in the third state where the housing is grasped by the user.

Preferably in the portable information display terminal according to the aforementioned aspect, the first state and the second state are states where the housing is placed on a placing surface, the first state includes a vertically placed use state where the user uses the portable information display terminal while standing the housing and a laid-down use state where the user uses the portable information display terminal while laying down the housing, the housing is formed to be placeable on the placing surface so that an inclination of the housing in the vertically placed use state, an inclination of the housing in the laid-down use state and an inclination of the housing in the second state become inclinations different from each other, and the portable information, display terminal is formed to perform control of shifting to the standby mode with the control portion in a case where the inclination of the housing in the second state is detected by the inclination sensor. When forming the portable information display terminal in this manner, the inclination of the housing in the vertically placed use state, the inclination of the housing in the laid-down use state and the inclination of the housing in the second state are the inclinations different from each other, whereby it is possible to easily detect in which state of the vertically placed use state, the laid-down use state and the second state the portable information display terminal is with the inclination sensor.

Preferably in this case, the portable information display terminal further includes a display portion displaying information, the second state is a state turning down the portable information display terminal so that the housing and the display portion are opposed to the placing surface, and the housing is formed to have an outer shape placeable on the placing surface so that an inclination in the vertically placed use state, an inclination in the laid-down use state and an inclination in the turned-down state become inclinations different from each other. When forming the portable information display terminal in this manner, the housing has the outer shape placeable on the placing surface to have inclinations different from each other, whereby the housing can be placed on the placing surface with any inclination of the inclination of the housing in the vertically placed use state sensable by the inclination sensor, the inclination of the housing in the laid-down use state and the inclination in the turned-down state without separately employing an auxiliary member such as a stand member.

Preferably in the portable information display terminal further including the aforementioned display portion displaying information, the housing is so formed that at least either the inclination in the vertically placed use state and the inclination in the turned-down state or the inclination in the laid-down use state and the inclination in the turned-down state are relatively different from each other by at least 90 degrees, and the control portion is formed to be capable of determining and specifying the first state and the second state on the basis of the inclinations, different from each other by at least 90 degrees, of the housing, i.e. at least either the inclination in the vertically placed use state and the inclination in the turned-down state or the inclination in the laid-down use state and the inclination in the turned-down state based on the outer shape of the housing acquired by the inclination sensor. When forming the portable information display terminal in this manner, the control portion can reliably determine and detect the vertically placed use state and the turned-down state, and can also reliably determine and detect the laid-down use state and the turned-down state due to the difference of at least 90 degrees between the inclinations based on the outer shape of the housing.

Preferably in this case, the inclination in the laid-down use state and the inclination in the turned-down state are relatively different from each other by substantially 180 degrees, and the control portion is formed to be capable of determining and specifying that the portable information display terminal is in the second state on the basis of the inclinations, different from each other by substantially 180 degrees, i.e. the inclination in the laid-down use state and the inclination in the turned-down state based on the outer shape of the housing acquired by the inclination sensor. When forming the portable information display terminal in this manner, the control portion can reliably distinguish the laid-down used state and the turned-down state from each other due to an operation of completely reversing the housing and the display portion by the user, whereby the control portion can shift the portable information display terminal to the standby mode in the turned-down state (second state).

Preferably in the portable information display terminal according to the aforementioned aspect, the first state is a state where the user uses the portable information display terminal, and the control portion is formed to start an application program corresponding to the detected state in a case where it is detected by the inclination sensor that the portable information display terminal has entered the first state, and formed to perform control of shifting to the standby mode without starting the application program in a case where it is detected by the inclination sensor that the portable information display terminal is in the second state. When forming the portable information display terminal in this manner, the control portion can automatically start an application program corresponding to each state in a case where the portable information display terminal enters the first state where the user uses the portable information display terminal, while the portable information display terminal can automatically shift to the standby mode in a case where the same enters the second state. Thus, operability by the user can be improved.

Preferably in the structure in which the aforementioned first state is the state where the user uses the portable information display terminal, the portable information display terminal further includes a communication portion used at a time of a remote control mode, the first state includes a laid-down use state where the user uses the portable information display terminal while laying down the housing on a placing surface, and the control portion is formed to start an application program corresponding to the remote control mode in a case where it is detected by the inclination sensor that the portable information display terminal is in the laid-down use state. When forming the portable information display terminal in this manner, the application program corresponding to the remote control mode is so started that the user can immediately use the portable information display terminal as a remote control in a case where he/she lays down the housing on the placing surface, whereby the operability by the user can be improved.

Preferably in the structure in which the aforementioned first state is the state where the user uses the portable information display terminal, the inclination sensor is formed to detect a third state which is a state where the housing is grasped by the user in addition to the first state and the second state, and the control portion is formed to start the application program corresponding to the detected state also in a case of specifying that the portable information display terminal is in the third state in addition to a case of the laid-down use state as the first state. When forming the portable information display terminal in this manner, it is conceivable that there is a high possibility that the user is in a situation capable of operating the portable information display terminal in a case where the third state where the housing is grasped by the user is detected. Also in this case, the application program is automatically started, whereby operability of the portable information display terminal can be improved.

Preferably in the structure in which the aforementioned first state is the state where the user uses the portable information display terminal, the portable information display terminal further includes a display portion displaying information, the first state includes a vertically placed use state where the user uses the portable information display terminal while standing the housing, and the control portion is formed to start an application program so formed that the user is capable of browsing the information displayed on the display portion in a state not operating the portable information display terminal in a case where it is detected by the inclination sensor that the portable information display terminal is in the vertically placed use state. When forming the portable information display terminal in this manner, also when the portable information display terminal is in a use state unsuitable to be positively operated by the user, the control portion can start an application program suitable to such a use state. Therefore, the portable information display terminal can be caused to effectively function also in the used state unsuitable to be positively operated by the user.

Preferably, the portable information display terminal according to the aforementioned aspect further includes a communication portion used at a time of a remote control mode, and the control portion is formed to shift the portable information display terminal to the standby mode and to transmit a signal instructing an apparatus which is an operation object in the remote control mode to shift to the standby mode through the communication portion at a time when it is detected by the inclination sensor that the portable information display terminal has entered the second state in a case where the portable information display terminal is used in the remote control mode. When forming the portable information display terminal in this manner, it is conceivable that the user does not use the apparatus which is the operation object in the remote control in a case where the portable information display terminal is shifted to the standby mode by being changed to the second state in a case where the portable information display terminal is used in the remote control mode, whereby the control portion can easily shift also the apparatus which is the operation object to the standby mode by transmitting the signal for shifting to the standby mode to the apparatus which is the operation object through the communication portion.

Preferably in the portable information display terminal further including the aforementioned communication portion, the control portion is formed to transmit the signal instructing the apparatus which is the operation object in the remote control mode to shift to the standby mode after the portable information display terminal shifts to the standby mode. When forming the portable information display terminal in this manner, the operation object apparatus is shifted to the standby mode after the portable information display terminal shifts to the standby mode dissimilarly to a case where the apparatus which is the operation object in the remote control mode is shifted to the standby mode before the portable information display terminal shifts to the standby mode, whereby the user can be prevented from getting confused when the operation object apparatus is abruptly shifted to the standby mode.

Preferably in the portable information display terminal according to the aforementioned aspect, the inclination sensor is formed to detect a third state which is a state where the housing is grasped by the user in addition the first state and the second state, and the control portion is formed to perform control of maintaining a function of detecting the first state, the second state and the third state with the inclination sensor when shifting to the standby mode. When forming the portable information display terminal in this manner, the states (attitudes) of the housing and the display portion can be immediately detected with the inclination sensor whose detection function is maintained also when the standby mode is continued. Thus, it is possible to quickly cope with change in the state (use state) of the portable information display terminal.

Preferably in this case, the portable information display terminal further includes a storage portion storing a use history of application programs started in the first state and the third state, and the control portion is formed to decide and start an application program corresponding to the first state or the third state on the basis of the use history stored in the storage portion in a case of returning from the standby mode on the basis of the inclination of the housing detected by the inclination sensor after shifting to the standby mode. When forming the portable information display terminal in this manner, the control portion can preferentially start an application program or the like highly frequently used by the user, for example, on the basis of the use history of the application programs used by the user in the past when the portable information display terminal returns from the standby mode, whereby the convenience for the user can be improved.

Preferably, the portable information display terminal according to the aforementioned aspect further includes a power supply switch, and the control portion is formed to perform control of returning from the standby mode in a case of determining that the power supply switch has been pressed down, also in a state where it is detected by the inclination sensor that the portable information display terminal is in the second state and the portable information display terminal is shifted to the standby mode. When forming the portable information display terminal in this manner, the portable information display terminal can be not only returned from the standby mode based on the detection result of the inclination sensor but also forcibly returned from the standby mode on the basis of pressing of the power supply switch, whereby a return operation from the standby mode can be so performed by a plurality of methods that operability of the portable information display terminal can be improved.

### Brief Description of the Drawings

[Fig. 1] An overall perspective view for illustrating the structure on a liquid crystal display portion side of a portable information display terminal according to a first embodiment of the present invention.
[Fig. 2] An overall perspective view for illustrating the structure on a surface side of a frame of the portable information display terminal according to the first embodiment shown in Fig. 1 opposite to a surface provided with a liquid crystal display portion.
[Fig. 3] A perspective view showing a state where the portable information display terminal is grasped while laterally orienting the longitudinal direction of the portable information display terminal according to the first embodiment shown in Fig. 1.
[Fig. 4] A perspective view showing a state where the portable information display terminal is grasped while vertically orienting the longitudinal direction of the portable information display terminal according to the first embodiment shown in Fig. 1.
[Fig. 5] A perspective view showing a state standing the frame and the liquid crystal display portion of the portable information display terminal according to the first embodiment shown in Fig. 1 on a placing surface.
[Fig. 6] A perspective view showing a state laying down the frame and the liquid crystal display portion of the portable information display terminal according to the first embodiment shown in Fig. 1 on the placing surface.
[Fig. 7] A block diagram for illustrating the internal structure of the portable information display terminal according to the first embodiment shown in Fig. 1.
[Fig. 8] A perspective view showing a state (unused state) where the frame and the liquid crystal display portion of the portable information display terminal according to the first embodiment shown in Fig. 1 are turned down with respect to the placing surface.
[Fig. 9] A diagram showing a display screen of small-scale application software (gadget) displayed on the liquid crystal display portion of the portable information display terminal according to the first embodiment shown in Fig. 1.
[Fig. 10] A diagram showing a display screen displayed on the liquid crystal display portion at a time of a remote control mode of the portable information display terminal according to the first embodiment shown in Fig. 1.
[Fig. 11] A perspective view showing a state transmitting infrared rays to a television set at the time of the remote control mode of the portable information display terminal according to the first embodiment shown in Fig. 1.
[Fig. 12] A diagram showing a display screen of an application playing back a streaming video displayed on the liquid crystal display portion of the portable information display terminal according to the first embodiment shown in Fig. 1.
[Fig. 13] A flow chart for illustrating a starting and standby mode shift flow of an application program corresponding to a state of the portable information display terminal according to the first embodiment shown in Fig. 1.
[Fig. 14] A block diagram for illustrating the internal structure of a portable information display terminal according to a second embodiment of the present invention.
[Fig. 15] A flow chart for illustrating a starting and standby mode shift flow of an application program corresponding to a state of the portable information display terminal according to the second embodiment of the present invention.

### Modes for Carrying Out the Invention

Embodiments embodying the present invention are now described on the basis of the drawings.

### (First Embodiment)

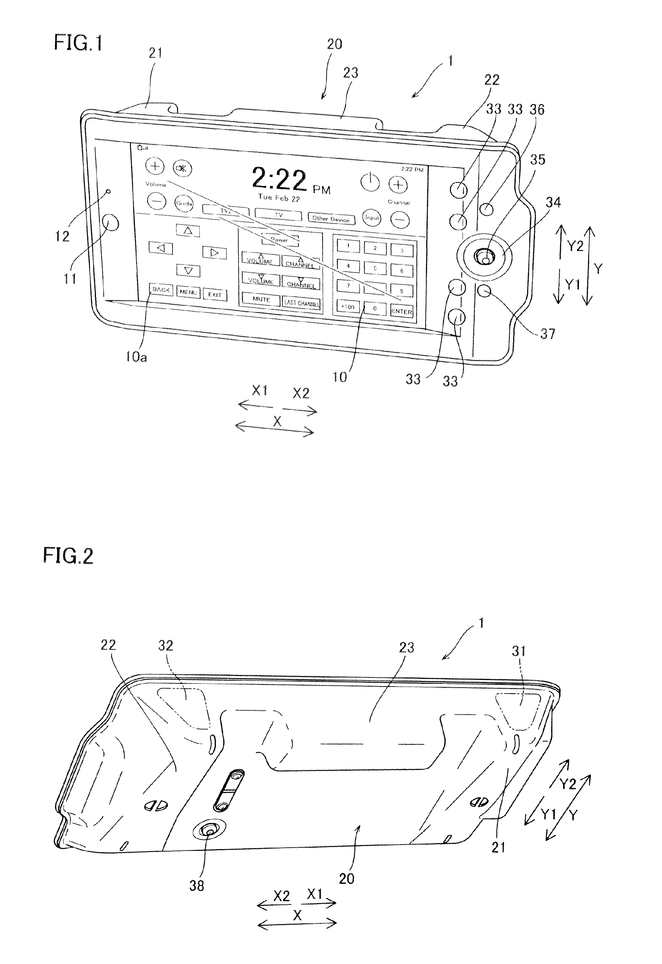

First, the structure of a portable information display terminal 1 according to a first embodiment of the present invention is described with reference to Figs. 1 to 12.

As shown in Figs. 1 and 2, the portable information display terminal 1 according to the first embodiment of the present invention is mainly constituted of a liquid crystal display portion 10 (see Fig. 1) displaying information and a frame 20 provided with the liquid crystal display portion 10 on a surface thereof. The liquid crystal display portion 10 is an example of the "display portion" in the present invention, and the frame 20 is an example of the "housing" in the present invention.

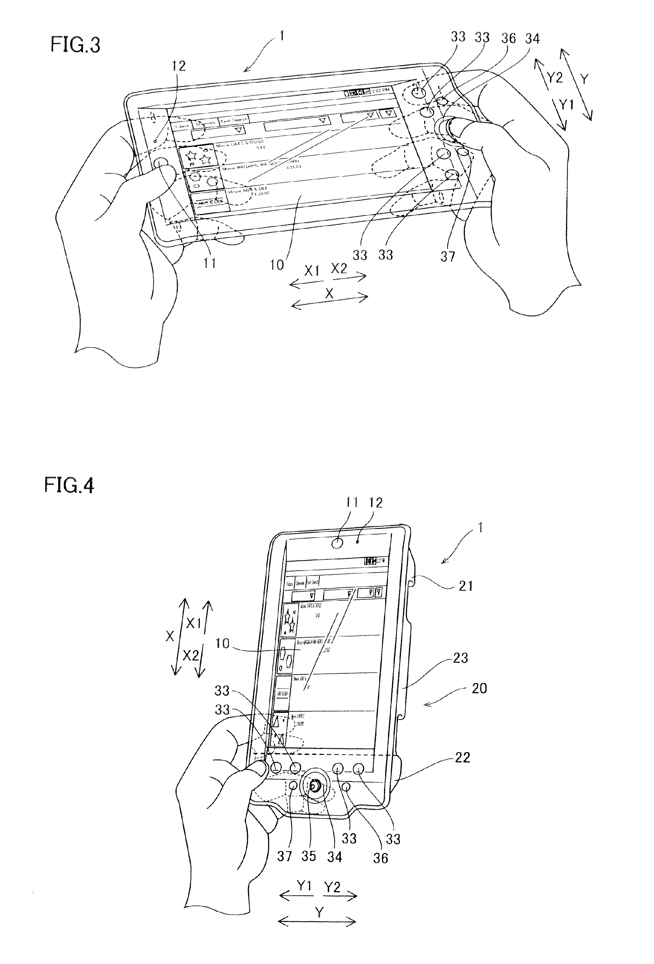

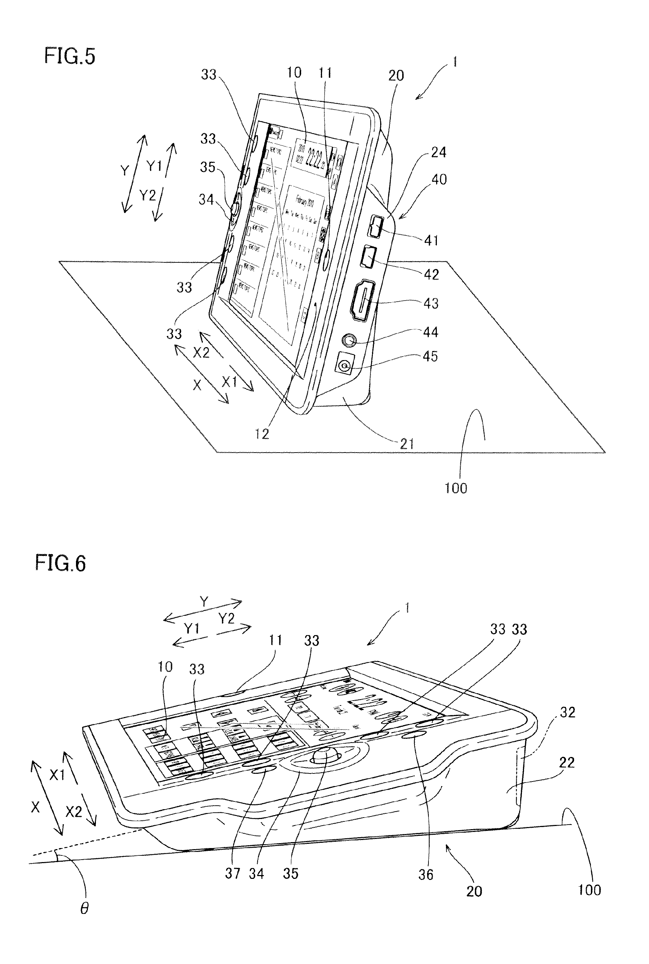

The portable information display terminal 1 is formed to be usable in a state (see Figs. 3 and 4) grasped by the user, and to be also usable in a state (see Fig. 5) standing the frame 20 and the liquid crystal display portion 10 on a placing surface 100 and a state (see Fig. 6) laying down the frame 20 and the liquid crystal display portion 10 on the placing surface 100. The state grasped by the user is an example of the "third state" in the present invention, and the state standing the frame 20 and the liquid crystal display portion 10 on the placing surface 100 is an example of the "first state" or the "vertically placed use state" in the present invention. The state laying down the frame 20 and the liquid crystal display portion 10 on the placing surface 100 is an example of the "first state" or the "laid-down use state" in the present invention.

This portable information display terminal 1 is formed to be Internet-connectable, and formed to be capable of using a function of receiving and playing back/outputting streaming distributions, an electronic mail function, a video chat function and a voice chat function by performing Internet connection. Further, the portable information display terminal 1 is formed to be usable as a remote control for a media player and a television set (not shown) etc. by shifting to a remote control mode also in a case where the same is not Internet-connected. In addition, the portable information display terminal 1 is capable of displaying a calender, a clock etc. by small-scale application software (gadget) in the state (see Fig. 5) standing the frame 20 and the liquid crystal display portion 10.

The structures of the liquid crystal display portion 10 and the frame 20 of the portable information display terminal 1 are now described in detail. The liquid crystal display portion 10 has a touch panel function as shown in Fig. 1, and is so formed that the user presses down operation buttons 10a displayed on the liquid crystal display portion 10 to be capable of operations according to application programs. A camera unit 11 is set on an arrow X1 direction side of the liquid crystal display portion 10. This camera unit 11 has a function of inputting an image at a time of a video chat in a case where the user uses the portable information display terminal 1 in a state grasped by the user, for example.

A microphone unit 12 is set in the vicinity of the camera unit 11. This microphone unit 12 has a function of inputting sounds in a voice chat and a video chat etc., for example.

The frame 20 is made of resin. As shown in Figs. 1 and 2, a plurality of protrusions 21, 22 and 23 are integrally provided on a surface of the frame 20 opposite to the surface provided with the liquid crystal display portion 10. The protrusions 21 and 22 are provided in the vicinity of both end portions in the longitudinal direction (direction X) of the frame 20 to extend in the short-side direction (direction Y) of the frame 20. As shown in Fig. 6, the protrusions 21 (see Fig. 2) and 22 are so formed that thicknesses gradually increase from a first end side (arrow Y1 direction side) toward a second end side (arrow Y2 direction side) in the short-side direction (direction Y) of the frame 20 respectively. In other words, the protrusions 21 and 22 are formed to have wedge shapes tapering in a tapering manner from the second side (arrow Y2 direction side) toward the first side (arrow Y1 direction side) in the short-side direction of the frame 20 as viewed from the longitudinal direction (the arrow X1 direction and an arrow X2 direction) of the frame 20 respectively.

The protrusions 21 and 22 are so formed in the aforementioned manner that the user places the portable information display terminal 1 on the placing surface 100 while directing surfaces of the protrusion 21 and the protrusion 22 on the arrow Y2 direction side downward, whereby the protrusions 21 and 22 are capable of supporting the frame 20 in a state standing the frame 20 and the liquid crystal display portion 10, as shown in Fig. 5. Further, the protrusions 21 and 22 are capable of supporting the frame 20 in a state laying down the frame 20 and the liquid crystal display portion 10 while inclining the same by a prescribed angle θ with respect to the placing surface 100, as shown in Fig. 6.

In addition, the protrusions 21 and 22 are so formed in the aforementioned manner that the user can grasp the protrusions 21 and 22 with both hands while laterally orienting the longitudinal direction (direction X) of the frame 20 and the liquid crystal display portion 10 as viewed from the user, as shown in Fig. 3. As shown in Fig. 4, the protrusion 22 is graspable with one hand (left hand) while vertically orienting the longitudinal direction (direction X) of the frame 20 and the liquid crystal display portion 10.

The protrusion 23 is provided in the vicinity of a second end portion (arrow Y2 direction end portion) in the short-side direction (direction Y) of the frame 20 between the protrusions 21 and 22, as shown in Fig. 2. A secondary cell (lithium ion cell) for supplying power to the portable information display terminal 1 is built (stored) in this protrusion 23.

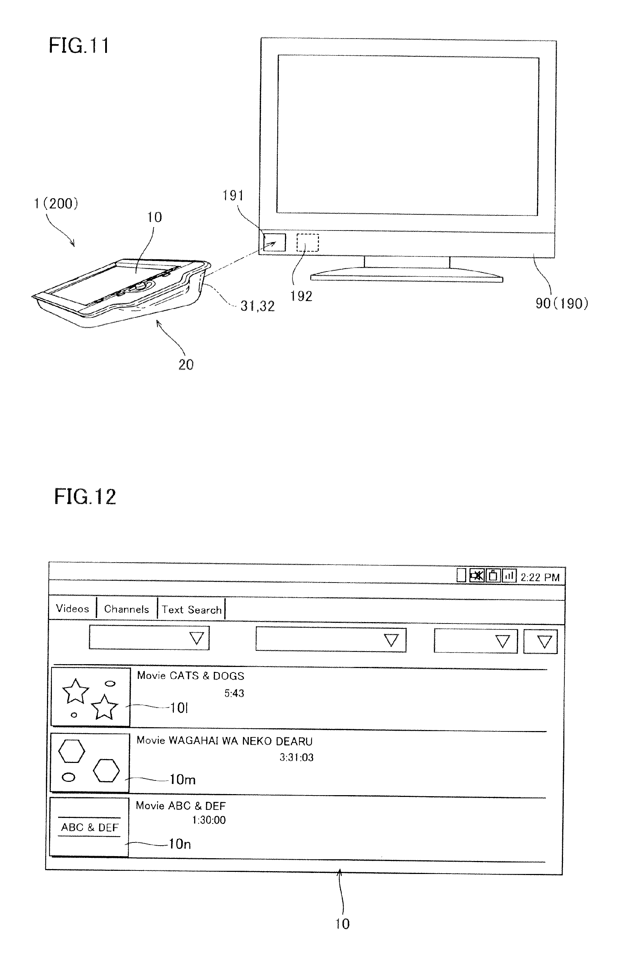

Infrared communication portions 31 and 32 are built in end surfaces on second end portion sides (arrow Y2 direction sides) of the protrusions 21 and 22 respectively. The infrared communication portions 31 and 32 are examples of the "communication portion" in the present invention. The infrared communication portions 31 and 32 are formed to emit infrared rays including prescribed signals (remote control signals) capable of operating a media player and a television set 90 (see Fig. 11) etc. in the remote control mode described later.

Various types of information processor mode switches 33 are provided on portions on an arrow X2 direction side in the longitudinal direction (direction X) of the liquid crystal display portion 10, as shown in Fig. 1. The various types of information processor mode switches 33 are switches used in an information processor mode processing an electronic mail, video and voice chats and the like respectively. A four-directional movable switch 34 (selection switch) is provided in the vicinity of the various types of information processor mode switches 33 on the arrow X2 direction side. A decision switch 35 is provided on a central portion of the four-directional movable switch 34. The four-directional movable switch 34 and the decision switch 35 are formed to be usable in both of the remote control mode and the information processor mode respectively.

A remote control mode transition switch 36 capable of switching the remote control mode and the information processor mode is provided on the arrow Y2 direction side of the four-directional movable switch 34. A return function switch 37 for returning an operation screen OSD-displayed on a display portion of a remote control operation object apparatus (television or the like) in the remote control mode from the current state to an immediately precedent state is provided on the arrow Y1 direction side of the four-directional movable switch 34. As shown in Fig. 2, a power supply switch 38 is provided on the back surface of the frame 20. This power supply switch 38 has a function of starting the portable information display terminal 1 to an ON-state by being pressed down in a case where the portable information display terminal 1 is in an OFF-state, and returning the portable information display terminal 1 from a standby mode in a case where the portable information display terminal 1 is in the standby mode described later.

As shown in Fig. 5, a plurality of connection portions 40 are provided on a side surface portion 24 of the frame 20 on the arrow X1 direction side. These connection portions 40 include two USB connection portions 41 and 42, an HDMI connection portion 43, a voice cable connection portion 44 and a power supply connector 45.

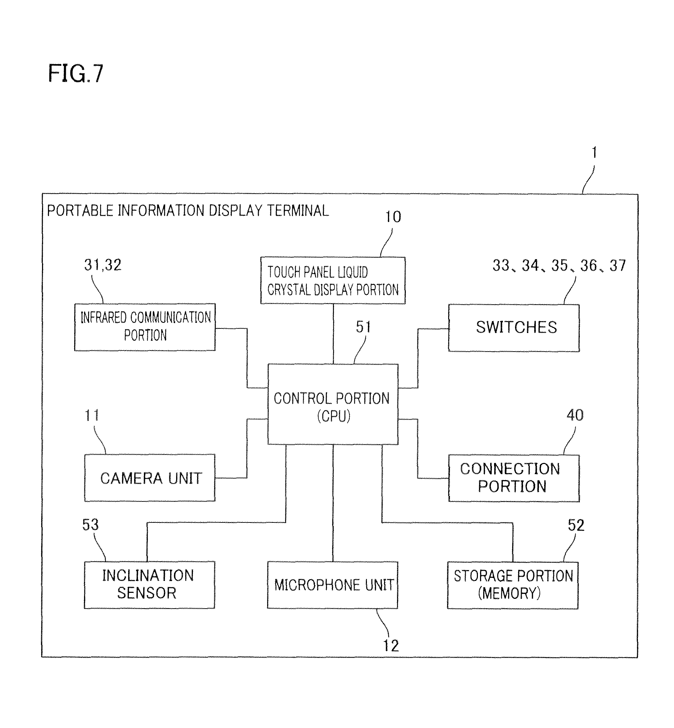

The internal structure of the portable information display terminal 1 is now described. The frame 20 of the portable information display terminal 1 is provided with a control portion (CPU) 51 managing control of the portable information display terminal 1, a storage portion (memory) 52 and an inclination sensor 53, as shown in Fig. 7.

The storage portion 52 stores application programs run by the control portion 51. Further, the storage portion 52 stores a use history of application programs used in a state (hereinafter referred to as a hand-held state (see Figs. 3 and 4)) where the user uses the portable information display terminal while grasping the portable information display terminal 1 with his/her hand, a state (hereinafter referred to as a stood state (see Fig. 5)) where the user uses the portable information display terminal 1 while standing the frame 20 and the liquid crystal display portion 10 on the placing surface 100 and a state (hereinafter referred to as a laid-down state (see Fig. 6)) where the user uses the portable information display terminal 1 while laying down the frame 20 and the liquid crystal display portion 10 on the placing surface 100.

According to the first embodiment, the inclination sensor 53 has a function of acquiring an inclination of the frame 20 (see Fig. 1). The inclination sensor 53 is provided for detecting (determining) which use state the portable information display terminal 1 is in, i.e. in the stood state (see Fig. 5), in the laid-down state (see Fig. 6) or in the hand-held state (see Figs. 3 and 4). Further, the inclination sensor 53 is formed to be capable of detecting not only the stood state (see Fig. 5), the laid-down state (see Fig. 6) and the hand-held state (see Figs. 3 and 4), but also a state (unused state) (see Fig. 6) turning down the portable information display terminal 1 so that the frame 20 and the liquid crystal display portion 10 are opposed to the placing surface 10. The state (unused state) turning down the portable information display terminal 1 so that the frame 20 and the liquid crystal display portion 10 are opposed to the placing surface 10 is an example of the "second state" in the present invention. The aforementioned turned-down state (unused state) is a state where the attitude of the frame 20 is completely different from those in the stood state (see Fig. 5) and the laid-down state (see Fig. 6).

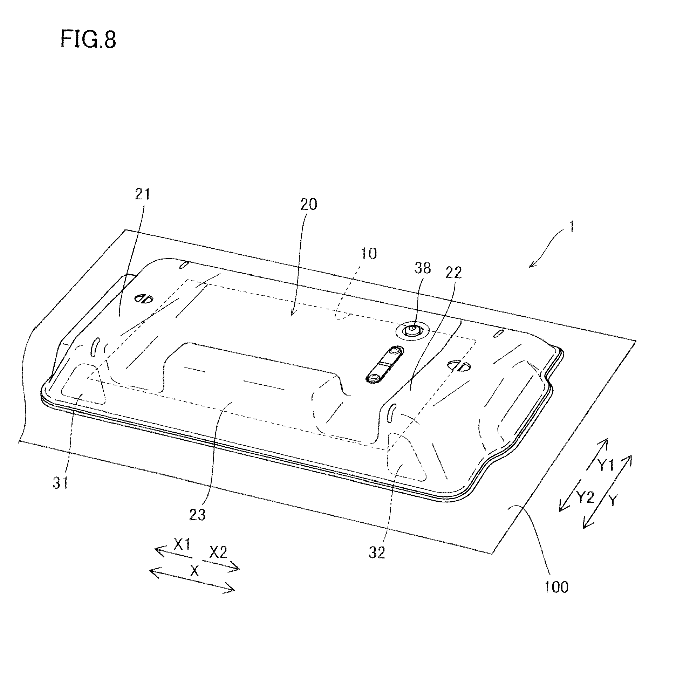

Due to the aforementioned outer shape of the frame 20, angles of the frame 20 with respect to the placing surface 10 are different from each other by at least 90 degrees between the inclination in the stood state (see Fig. 5), the inclination in the laid-down state (see Fig. 6) and the inclination in the laid-down state (see Fig. 8). The turned-down state is a state where the portable information display terminal 1 has been reversed vertically upside down from the laid-down state, and these states have inclinations different from each other substantially by 180 degrees. Thus, the control portion 51 is formed to be capable of easily detecting and specifying the respective states on the basis of the different inclinations of the frame 20 with respect to the placing surface 100.

In the hand-held state (see Figs. 3 and 4), a detection value detected by the inclination sensor 53 changes every detection time due to the fact that the user finely moves, and hence the control portion 51 is enabled to distinguish the stood state, the laid-down state and the turned-down state (unused state) and the hand-held state from each other. Further, the inclination sensor 53 is formed to be capable of detecting a vertically oriented use state (hereinafter referred to as a vertically held state (see Fig. 4)) where the user uses the portable information display terminal 1 while vertically orienting the longitudinal direction of the frame 20 and a laterally oriented use state (hereinafter referred to a laterally held state (see Fig. 3)) where the user uses the portable information display terminal 1 while laterally orienting the longitudinal direction of the frame 20 also in a case where the portable information display terminal 1 is in the hand-held state (see Figs. 3 and 4). In the vertically held state and the laterally held state, the liquid crystal display portion 10 is rotated by about 90 degrees as shown in Figs. 3 and 4, whereby the inclination sensor 53 is capable of easily determining and specifying different inclinations in the vertically held state and the laterally held state.

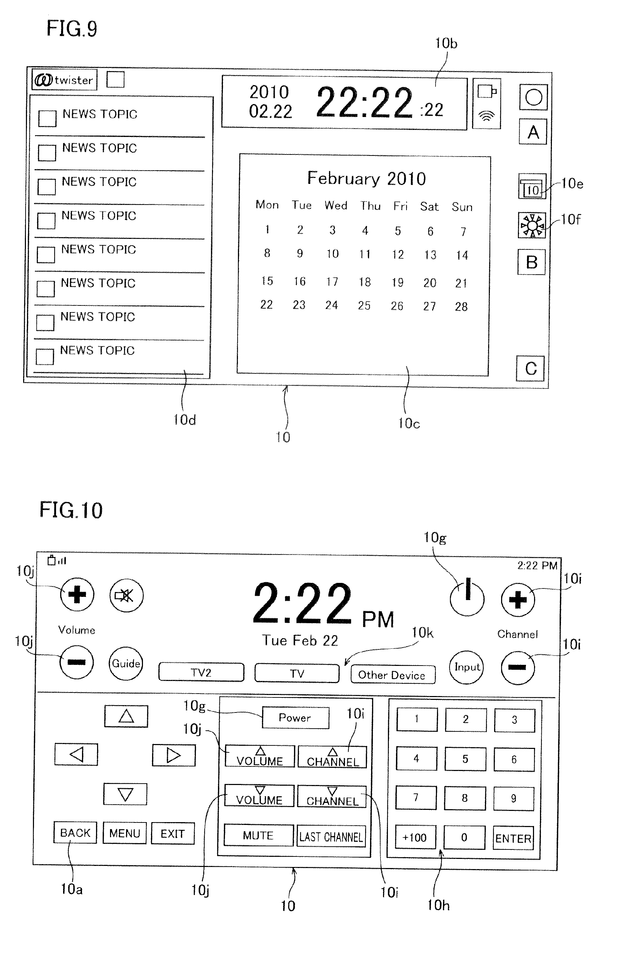

According to the first embodiment, the control portion 51 is formed to determine and specify the use state of the frame 20 and the liquid crystal display portion 10 on the basis of the inclination acquired by the inclination sensor 53. Further, the control portion 51 is formed to perform control of automatically starting an application program corresponding to the specified use state or shifting to the standby mode. More specifically, the control portion 51 is formed to start an application program not premised to be operated by the user in a case of specifying that the portable information display terminal 1 is in the stood state (see Fig. 5). The application program not premised to be operated by the user is an application, passive for the user, including a gadget displaying a clock 10b, a calender 10c and topics of news 10d etc. on the liquid crystal display portion 10 shown in Fig. 9, for example. This gadget is so formed that icons 10e and 10f etc. of the liquid crystal display portion 10 are so operated that a scheduler and a weather report etc. are displayable on the liquid crystal display portion 10 respectively.

The control portion 51 is formed to start an application program premised to be operated by the user in a case of specifying that the portable information display terminal 1 is in the laid-down state (see Fig. 6). The application program premised to be operated by the user is an application, active for the user, usable as a remote controller for the media player and the television set 90 (see Fig. 11) etc. as shown in Fig. 10, for example. This remote control application program is a program used when the portable information display terminal 1 is shifted to the remote control mode. The control portion 51 is formed to display a power supply button 10g for switching a power source for the television set 90 to ON or OFF, a channel button group 10h for switching the channel of a broadcasting received by the television set 90, a volume control button 10j controlling the volume of sounds output from the television set 90 and an object switching button group 10k changing an operation object of the remote control such as a television set (not shown) other than the television set 90 (see Fig. 11) and the media player (not shown) etc. on the liquid crystal display portion 10 having the touch panel function in the remote control application program, for example.

The control portion 51 is formed to start an application program premised to be operated by the user also in a case of recognizing that the portable information display terminal 1 is in the hand-held state (see Figs. 3 and 4). The application program premised to be operated by the user is an application program, active for the user, capable of playing back a streaming video, as shown in Fig. 12, for example. This video playback application program is a program used in the information processor mode. The control portion 51 is so formed that the user is capable of selecting any one video content from among a plurality of video contents 101, 10m and 10n etc. displayed through Internet lines on the touch panel in this video playback application program, for example. Further, the control portion 51 is formed to be capable of playing back a selected video content in the video playback application program when any video content is selected by the user from among the video contents 101, 10m and 10n etc. The application program corresponding to the specified application program is previously set by the user.

The control portion 51 is formed to determine which use state the portable information display terminal 1 is in, i.e. in the state (state of Figs. 5, 6 and 8) placed on the placing surface 100 or in the state (state of Figs. 3 and 4) grasped by the user by determining whether or not the inclination value detected by the inclination sensor 53 regularly changes piecemeal. The control portion 51 is formed to determine that the portable information display terminal 1 is in the state (hand-held state) grasped by the user in the case where the inclination value detected by the inclination sensor 53 regularly changes piecemeal. Further, the control portion 51 is formed to determine that the portable information display terminal 1 is in the state placed on the placing surface 100 in a case where the inclination value detected by the inclination sensor 53 is stable.

According to the first embodiment, the control portion 51 is formed to perform control of shifting to the standby mode in a case of specifying that the portable information display terminal 1 is in the state (unused state) (see Fig. 8) turning down the portable information display terminal 1 so that the frame 20 and the liquid crystal display portion 10 are opposed to the placing surface 100 with the inclination sensor 53. The control portion 51 is formed not to start any application program used by the user in this case, dissimilarly to the time of the use state (the stood state, the laid-down state or the hand-held state).

According to the first embodiment, the control portion 51 is formed not to shift to the standby mode as to a case where an inclination value included in the range of inclination values corresponding to the turned-down state (unused state) is detected also in a case (case of the hand-held state) where an inclination value (inclination value fluctuating piecemeal) in the hand-held state is detected by the inclination sensor 53. For example, a case where the user grasps the portable information display terminal 1 and observing the liquid crystal display portion 10 while lying on his/her back or the like applies to this. The portable information display terminal 1 is formed not to be shifted to the standby mode in such a situation.

Starting and maintenance of an application program corresponding to the use state of the portable information display terminal 1 according to the first embodiment and a standby mode shifting flow are now described with reference to Figs. 3 to 8 and 13.

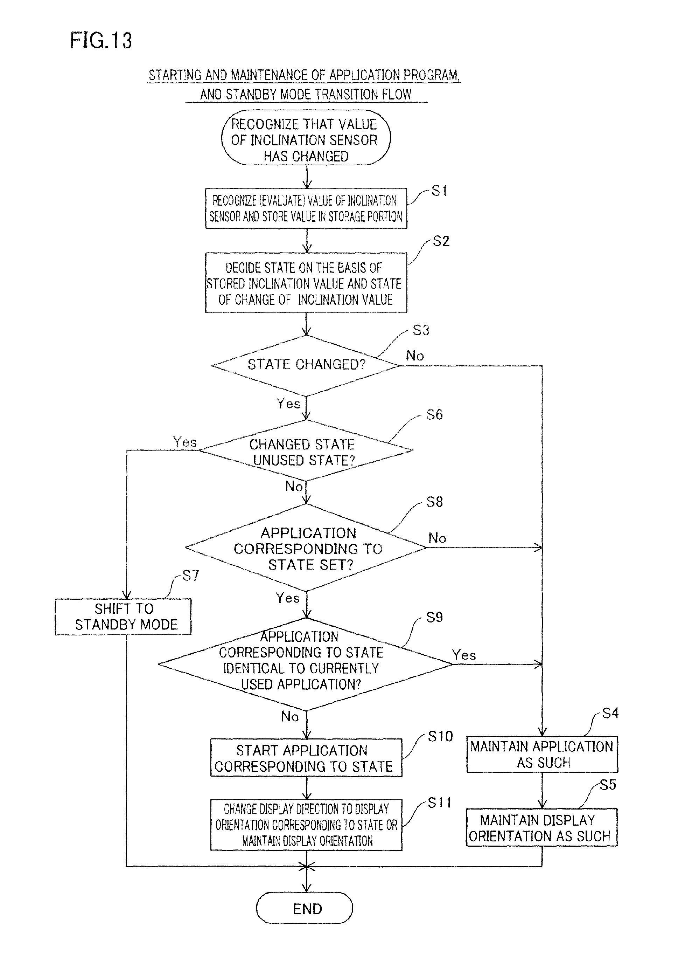

As shown in Fig. 13, the control portion 51 recognizes that the inclination value acquired by the inclination sensor 53 has changed (event occurrence), whereby the starting flow for the application program corresponding to the use state of the portable information display terminal 1 is started. First, the inclination value acquired from the inclination sensor 53 is recognized (evaluated) by the control portion 51 (see Fig. 7), and the inclination value is stored in the storage portion 52 at a step S1. At a step S2, which state of the stood state (see Fig. 5), the laid-down state (see Fig. 6), the turned-down state (unused state) (see Fig. 8) and the hand-held state (see Figs. 3 and 4) the portable information display terminal 1 is in is determined on the basis of a stored past inclination value (inclination value stored when the inclination value has precedently changed) and the inclination value stored this time. In other words, the portable information display terminal 1 is decided to be in the hand-held state in a case where the stored past inclination value and the inclination value stored this time change piecemeal. Further, the portable information display terminal 1 is decided to be in the stood state in a case where the stored past inclination value and the inclination value stored this time do not change piecemeal but the inclination value stored this time is in the range of the inclination value in the stood state, the portable information display terminal 1 is decided to be in the laid-down state in a case where the inclination value stored this time is in the range of the inclination value in the laid-down state, and the portable information display terminal 1 is decided to be in the turned-down state (unused state) in a case where the inclination value stored this time is in the range of the inclination value in the turned-down state (unused state).

Thereafter whether or not the decided state has been changed from a state (before event occurrence) before the inclination value acquired by the inclination sensor 53 changes is determined by the control portion 51 at a step S3. In a case where it is determined at the step S3 that the decided state has not been changed from the state (before event occurrence) before the inclination value acquired by the inclination sensor 53 changes, the control portion 51 advances to a step S4. The state has not been changed, and hence the application program is not changed but the application program is maintained as such at the step S4, and the control portion 51 advances to a step S5. The orientation of the display displayed on the liquid crystal display portion 10 is not changed either but maintained as such at the step S5, and the starting and maintenance for the application program and the standby mode shifting flow terminate.

In a case where it is determined at the step S3 that the decided state has been changed from the state (before event occurrence) before the inclination value acquired by the inclination sensor 53 changes, the control portion 51 advances to a step S6. At the step S6, whether or not the changed state is the state (unused state) (see Fig. 8) turning down the portable information display terminal 1 so that the frame 20 and the liquid crystal display portion 10 are opposed to the placing surface 100 is determined by the control portion 51. In a case where it is determined that the changed state is the turned-down state (unused state) at the step S6, the control portion 51 advances to a step S7. At the step S7, the portable information display terminal 1 is shifted to the standby mode by the control portion 51, and the starting and maintenance for the application program and the standby mode shifting flow terminate. Also after the portable information display terminal 1 shifts to the standby mode, the function of detecting the state of the portable information display terminal 1 (attitude of the frame 20) with the inclination sensor 53 is maintained. In other words, also when this control flow terminates, this control flow is triggered by occurrence of such a new event that the inclination value acquired by the inclination sensor 53 changes, and started from the step S1 again. In this case, the use history of application programs started in the past is stored in the storage portion 52, and hence an application program is started on the basis of the use history stored in the storage portion 52 when returning from the standby mode. In a case where it is determined that the changed state is not the turned-down state (unused state) at the step S6, the control portion 51 advances to a step S8.

Thereafter at the step S8, whether or not the application program corresponding to the changed state is set is determined by the control portion 51. In other words, whether or not an application program automatically started as to each of the state standing the portable information display terminal 1, the state laying down the same and the hand-held state is set by the user is determined at the step S8 with respect to the currently used application. In a case where it is determined at the step S8 that the application program corresponding to the changed state is not set, the control portion 51 advances to the aforementioned step S4 and the step S5, and the starting and maintenance for the application program and the standby mode shifting flow terminate. In a case where it is determined at the step S8 that the application program corresponding to the changed state is set, the control portion 51 advances to a step S9.

At the step S9, whether or not the application program having been set is the same application program as the currently used application program is determined by the control portion 51. In a case where it is determined that the application program having been set is the same application program as the currently used application program at the step S9, the application program may not be changed, and hence the control portion 251 advances to the step S4 and the step S5, and the starting and maintenance for the application program and the standby mode shifting flow terminate. In a case where it is determined that the application program having been set is not the same application program as the currently used application program at the step S9, the control portion 51 advances to a step S10.

Thereafter the application program, corresponding to the changed state, set by the user is started at the step S10, and the control portion 51 advances to a step S11. At the step S11, the display direction is changed to a display orientation corresponding to the state or the display orientation corresponding to the state is maintained, and the starting and maintenance for the application program and the standby mode shifting flow terminate. In a case where the state is changed between the stood state and the laid-down state or the laterally held state of the hand-held state, for example, the display orientation displayed on the liquid crystal display portion 10 is rotated by 180 degrees and changed. In a case where the state is changed between the vertically held state in the hand-held state and the stood state, the laid-down state or the laterally held state of the hand-held state, the display orientation displayed on the liquid crystal display portion 10 is rotated by 90 degrees or 270 degrees and changed. In a case where the state is changed between the laterally held state in the hand-held state and the laid-down state, the display orientation displayed on the liquid crystal display portion 10 is not changed but maintained as such.

According to the first embodiment, as hereinabove described, the inclination sensor 53 detecting that the portable information display terminal. 1 has entered the first state (state (laid-down state) where the user uses the portable information display terminal 1 while laying down the frame 20 on the placing surface 100 or the state (stood state) where the user uses the portable information display terminal 1 while standing the frame 20 on the placing state 100) and that the portable information display terminal 1 has entered the second state (state (unused state) where the user turns down the portable information display terminal 1 so that the frame 20 is opposed to the placing surface) is provided, whereby at least two types of states, i.e. the first state (state (laid-down state) where the user uses the portable information display terminal 1 while laying down the frame 20 on the placing surface 100 or the state (stood state) where the user uses the portable information display terminal 1 while standing the frame 20 on the placing state 100) and the second state (state (unused state) where the user turns down the portable information display terminal 1 so that the frame 20 is opposed to the placing surface) can be detected on the basis of the inclination detected by the inclination sensor 53 without being influenced by the ambient environment (brightness) of the portable information display terminal 1 dissimilarly to a structure employing an illuminance sensor or the like, for example. Thus, the portable information display terminal 1 can be inhibited from shifting the standby mode in the state (first state) other than the second state in a case where the control portion 51 performs control of shifting the portable information display terminal 1 to the standby mode in the second state.

According to the first embodiment, as hereinabove described, the control portion 51 determines and specifies that the portable information display terminal 1 is in the first state and does not shift to the standby mode in a case where it is detected by the inclination sensor 53 that the portable information display terminal 1 is in the first state (state (laid-down state) where the user uses the portable information display terminal 1 while laying down the frame 20 on the placing surface 100 or the state (stood state) where the user uses the portable information display terminal 1 while standing the frame 20 on the placing state 100), whereby the portable information display terminal 1 can be inhibited to the standby mode in a case where the inclination sensor 53 detects the first state different from the second state (state (unused state)) where the user turns down the portable information display terminal 1 so that the frame 20 is opposed to the placing surface 100.

According to the first embodiment, as hereinabove described, the control portion 51 performs control of shifting to the standby mode in a case where it is detected by the inclination sensor 53 that the portable information display terminal 1 is in the state (unused state) where the user turns down the portable information display terminal 1 for opposing the frame 20 and the liquid crystal display portion 10 to the placing surface 100 so that the user can shift the portable information display terminal 1 to the standby mode by simply laying down the frame 20 and the liquid crystal display portion 10 to be opposed to the placing surface 100 in a case where he/she does not use the portable information display terminal 1, whereby the portable information display terminal 1 is so shifted to the standby mode that power consumption in the portable information terminal 1 can be easily reduced.

According to the first embodiment, as hereinabove described, the control portion 51 performs control of not shifting to the standby mode in a case where it is detected by the inclination sensor 53 that the portable information display terminal 1 is in the state (hand-held) where the frame 20 is grasped by the user also in a case where the inclination corresponding to the state (unused state) where the user turns down the frame 20 and the liquid crystal display portion 10 to be opposed to the placing surface 100, whereby the portable information display terminal 1 in use can be prevented from erroneously shifting to the standby mode in a case where the inclination corresponding to the state (unused state) turning down the portable information display terminal 1 is detected in the state where the frame 20 is grasped by the user since the user is generally making use of the portable information terminal 1 in a case where the portable information display terminal 1 is in the state (hand-held state) where the frame 20 is grasped by the user.

According to the first embodiment, as hereinabove described, the control portion 51 determines and specifies the first state (the laid-down state or the stood state) and the second state (turned-down state (unused state)) by comparing the inclination angle before the attitude of the frame 20 stored in the storage portion 52 is changed and the inclination angle after the attitude of the frame 20 stored in the storage portion 52 is changed with each other and determines and specifies the third state (hand-held state where the user grasps the portable information display terminal 1) where the frame 20 is grasped by the third state, whereby the same can reliably determine and specify the use state of the portable information display terminal 1 on the basis of the change in the inclination angle before and after the attitude of the frame 20 is changed.

According to the first embodiment, as hereinabove described, the control portion 51 determines and specifies the second state (turned-down state (unused state)) in a case where the inclination angle detected by the inclination sensor 53 does not change with time in a prescribed range, whereby the same can correctly determine and specify the state (second state) where the portable information display terminal 1 is turned down. Thus, the control portion 51 can reliably perform control of shifting the portable information display terminal 1 to the standby mode in the turned-down state (unused state).

According to the first embodiment, as herein above described, the control portion 51 determines that the portable information display terminal 1 is in the third state (hand-held state where the user grasps grasps the portable information display terminal 1) in a case where the inclination angle detected by the inclination sensor 53 in an angle range corresponding to the second state changes with time in the prescribed range also when the inclination angle detected by the inclination sensor 53 is in the angle range corresponding to the second state (turned-down state (unused state)), whereby the portable information display terminal 1 can be easily presented from erroneously shifting to the standby mode in a case where the inclination corresponding to the turned-down state (unused state) is detected in the hand-held state where the frame 20 is grasped by the user.

According to the first embodiment, as hereinabove described, the frame 20 is formed to be placeable on the placing surface 100 so that the inclination of the frame 20 in the laid-down state, the inclination of the frame 20 in the stood state and the inclination of the frame 20 in the turned-down state (unused state) become inclinations different from each other so that the inclination of the frame 20 in the laid-down state, the inclination of the frame 20 in the stood state and the inclination of the frame 20 in the turned-down state (unused state) are inclinations different from each other, whereby which state of the laid-down state, the stood state and the turned-down state (unused state) the portable information display terminal 1 is in can be easily detected with the inclination sensor 53.

According to the first embodiment, as hereinabove described, the frame 20 is formed to have the outer shape placeable on the placing surface 100 so that the inclination of the frame 20 in the laid-down state, the inclination of the frame 20 in the stood state and the inclination of the frame 20 in the turned-down state (unused state) become inclinations different from each other so that the frame 20 has the outer shape peaceable on the placing surface 100 to become the inclinations different from each other, whereby the frame 20 can be placed on the placing surface 100 with any inclination of the inclination of the frame 20 in the laid-down state sensable by the inclination sensor 53, the inclination of the frame 20 in the stood state and the inclination of the frame 20 in the turned-down state (unused state) without separately employing an auxiliary member such as a stand member.

According to the first embodiment, as hereinabove described, the control portion 51 determines the first state (the laid-down state or the stood state) and the second state (turned-down state (unused state)) on the basis of the inclinations, different from each other by at least 90 degrees, of the housing, i.e. the respective ones of the inclination in the vertically placed use state and the inclination in the turned-down state (unused state) based on the outer shape of the frame 20 acquired by the inclination sensor 53 and the inclination in the laid-down use state and the inclination in the laid-down state (unused state), whereby the same can reliably determine and detect the stood state and the turned-down state and reliably determine and detect the laid-down state and the turned-down state due to the difference of at least 90 degrees between the inclinations based on the outer shape of the frame 20.

According to the first embodiment, as hereinabove described, the control portion 51 determines the turned-down state (unused state) on the basis of the inclinations, different from each other by substantially 180 degrees, of the frame 20, i.e. the inclination in the state where the user lays down the portable information display terminal 1 and the inclination in the state where the user turns down the portable information display terminal 1 based on the outer shape of the frame 20 acquired by the inclination sensor 53 so that the same can reliably distinguish the state where the user lays down the portable information display terminal 1 and the state where the user turns down the portable information display terminal 1 from each other by an operation of completely reversing the frame 20 and the liquid crystal display portion 20 by the user, whereby the control portion 51 can shift the portable information display terminal 1 to the standby mode in the turned-down state (unused state).

According to the first embodiment, as hereinabove described, the control portion 51 starts the application program corresponding to the detected state in a case where it is detected by the inclination sensor 53 that the portable information display terminal 1 has entered the laid-down state or the stood state and performs control of shifting to the standby mode without starting the application program in a case where it is detected by the inclination sensor 53 that the portable information display terminal 1 is in the turned-down state (unused state), whereby the same can automatically start the application programs corresponding to the respective states in cases where the portable information display terminal 1 enters the laid-down state and the stood state which are the use states while the portable information display terminal 1 can automatically shift to the standby mode in a case where the same enters the turned-down state (unused state). Thus, operability by the user can be improved.

According to the first embodiment, as hereinabove described, the control portion 51 starts the application program corresponding to the remote control mode in a case where it is detected by the inclination sensor 53 that the portable information display terminal 1 is the state where the user uses the portable information display terminal 1 while laying down the frame 20 and the liquid crystal display portion 10 on the placing surface 100 so that the application program corresponding to the remote control is so started that the user can immediately use the portable information display terminal 1 as a remote control in a case where he/she lays down the frame 20 and the liquid crystal display portion 10 on the placing surface 100, whereby the operability by the user can be improved.

According to the first embodiment, as hereinabove described, the control portion 51 starts the application program corresponding to the detected state also in a case of specifying that the portable information display terminal 1 is in the hand-held state where the user grasps the portable information display terminal 1 in addition to the case of the laid-down state, whereby there is a high possibility that the user is in a situation capable of operating the portable information display terminal 1 in a case where it is detected that the frame 20 is in the hand-held state. Also in this case, the application program is automatically started, whereby the operability of the portable information display terminal 1 can be improved.

According to the first embodiment, as hereinabove described, the application program started in the case where it is detected by the inclination sensor 53 that the portable information display terminal 1 is in the stood state is an application program so formed that the user is capable of browsing the information displayed on the liquid crystal display portion 10 in a state not operating the portable information display terminal 1. Such an application program is a passive application program including the gadget displaying the clock 10b, the calender 10c and the topics of the news 10d (see Fig. 9) etc. on the liquid crystal display portion 10. Thus, also in a case where the portable information display terminal 1 is in a use state unsuitable to be positively operated by the user, the control portion 51 can start an application program suitable to such a use state. Therefore, the portable information display terminal 1 can be caused to effectively function also in the use state where the user uses the portable information display terminal 1 while standing the liquid crystal display portion 10 on the placing surface 100.

According to the first embodiment, as hereinabove described, the portable information display terminal 1 maintains the function of detecting the first state (the laid-down state or the stood state), the second state (turned-down state (unused state)) and the third state (hand-held state where the user grasps grasps the portable information display terminal 1) with the inclination sensor 53 when shifting to the standby mode, whereby the states (attitudes) of the frame 20 and the liquid crystal display portion 10 can be immediately detected with the inclination sensor 53 in which the detecting function is maintained also when the standby mode is continued. Thus, it is possible to quickly cope with change in the state (use state) of the portable information display terminal 1.

According to the first embodiment, as hereinabove described, the control portion 51 decides and starts the application program corresponding to the first state (the laid-down state or the stood state) or the third state (hand-held state where the user grasps grasps the portable information display terminal 1) in a case of returning from the standby mode on the basis of the inclination of the frame 20 detected by the inclination sensor 53 after shifting to the standby mode so that the same can preferentially start an application program highly frequently used by the user, for example, on the basis of the use history of application programs used by the user in the past when returning from the standby mode, whereby convenience for the user can be improved.

According to the first embodiment, as hereinabove described, the control portion 51 performs control of returning from the standby mode in a case of determining that the power supply switch 38 has been pressed down also in a state where it is detected by the inclination sensor 53 that the portable information display terminal 1 is in the second state (turned-down state (unused state)) and the portable information display terminal 1 is shifted to the standby mode so that the portable information display terminal 1 can be not only returned from the standby mode based on the detection result of the inclination sensor 53 but also forcibly returned from the standby mode on the basis of pressing of the power supply switch 38, whereby a return operation from the standby mode can be so performed by a plurality of methods that the operability of the portable information display terminal 1 can be improved.

### (Second Embodiment)

A portable information display terminal 201 according to a second embodiment of the present invention is now described with reference to Figs. 11, 14 and 15. In this second embodiment, an example of shifting both of the portable information display terminal 201 and an operation object apparatus (television set 190, for example) in a remote control mode to a standby mode in a case where the portable information display terminal 201 is changed to a turned-down state (unused state) in the remote control mode is described, dissimilarly to the aforementioned first embodiment in which only the portable information display terminal 1 shifts to the standby mode in the case where the turned-down state (unused state) is detected.

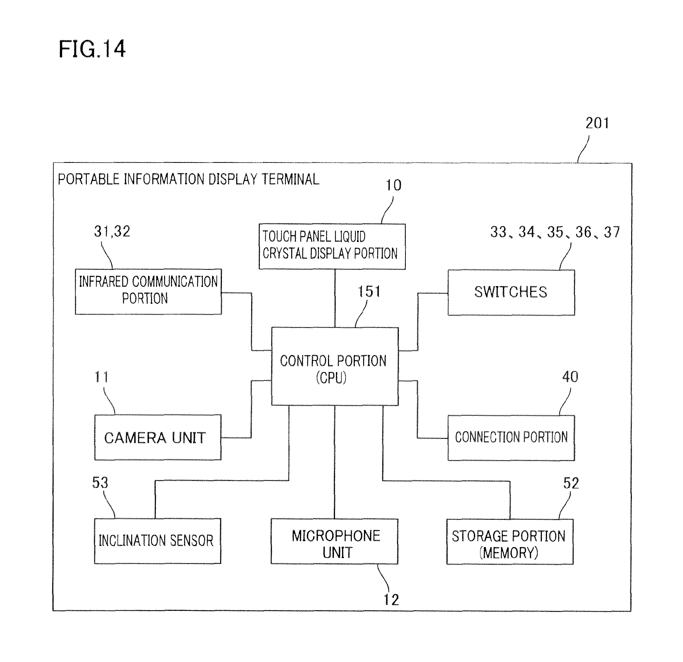

According to the second embodiment, a control portion (CPU) 151 is formed to shift the portable information display terminal 201 to the standby mode in a case where an inclination value in a turned-down state (unused state) is detected by an inclination sensor 53 in a case where the portable information display terminal 201 is used in the remote control mode, as shown in Fig. 14. The control portion (CPU) 151 is further formed to transmit a signal instructing the apparatus (television set 190 (see Fig. 11)) which is the operation object in the remote control mode to shift to the standby mode through infrared communication portions 31 and 32 in this case. In a case where the signal instructing the television set 190 to shift to the standby mode is transmitted from the infrared communication portions 31 and 32 of the portable information display terminal 201, the signal is received by a photoreceiving portion 191 of the television set 190. A control portion 192 of the television set 190 is formed to shift the television set 190 to the standby mode on the basis of the signal received by the photoreceiving portion 191 in this case. In other words, the control portion 151 is formed to perform control of shifting both of the portable information display terminal 201 and the apparatus (television set 190) which is the operation object in the remote control mode to the standby mode in a case where a frame 20 and a liquid crystal display portion 10 are turned down to be opposed to a placing surface 100 in a case where the portable information display terminal 201 is in the remote control mode.

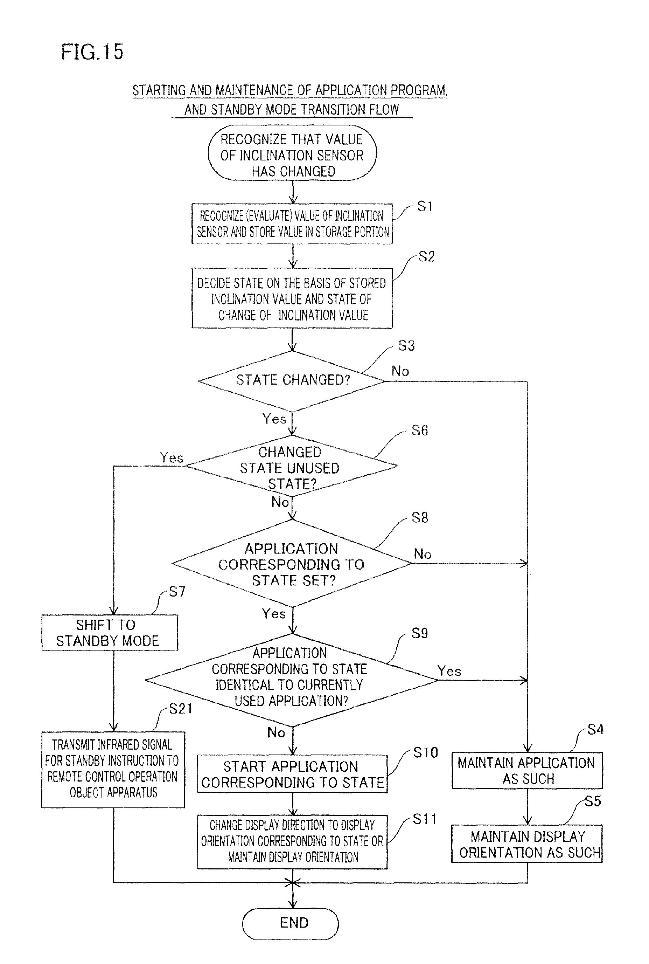

Starting and maintenance of an application program corresponding to a use state of the portable information display terminal 201 according to the second embodiment and a standby mode shifting flow are now described with reference to Figs. 11, 14 and 15. In a flow chart of Fig. 15, processing at a step S1 to a step S11 is similar to the processing in the aforementioned first embodiment.

As shown in Fig. 15, the portable information display terminal 201 is shifted to the standby mode by the control portion 151 (see Fig. 14) at the step S7, and the control portion 151 advances to a step S21. At the step S21, an infrared signal instructing the apparatus (television set 190 (see Fig. 11), for example) which is the operation object in the remote control mode is transmitted by the control portion 151 through the infrared communication portions 31 and 32. Thereafter the starting and maintenance of the application program and the standby mode shifting flow terminate.

According to the second embodiment, as hereinabove described, the control portion 151 shifts the portable information display terminal 201 to the standby mode and transmits the signal instructing the apparatus (television set 190) which is the operation object in the remote control mode through the infrared communication portions 31 and 32 when it is detected by the inclination sensor 53 that the portable information display terminal 201 has entered the turned-down state (unused state) in a case where the same is used in the remote control mode so that it is conceivable that the user does not use the apparatus (television set 190) which is the operation object in the remote control mode in a case where the portable information display terminal 201 is shifted to the standby mod bye being changed to the turned-down state (unused state) in the case where the portable information display terminal 201 is used in the remote control mode, whereby the control portion 151 can easily shift also the apparatus (television set 190) which is the operation object to the standby mode by transmitting the signal for shifting the apparatus (television set 190) which is the operation object to the standby mode through the infrared communication portions 31 and 32.

According to the second embodiment, as hereinabove described, the control portion 151 transmits the signal instructing the apparatus (television set 190, for example) which is the operation object in the remote control mode to shift to the standby mode after the portable information display terminal 1 shifts to the standby mode so that the operation object apparatus (television set 190) is shifted to the standby mode after the portable information display terminal 1 shifts to the standby mode dissimilarly to a case where the operation object apparatus (television set 190) which is the operation object in the remote control mode is shifted to the standby mode before the portable information display terminal 1 shifts to the standby mode, whereby the user can be prevented from being confused when the operation object apparatus is abruptly shifted to the standby mode.

The embodiments disclosed this time must be considered as illustrative in all points and not restrictive. The range of the present invention is shown not by the above description of the embodiments but by the scope of claims for patent, and all modifications within the meaning and range equivalent to the scope of claims for patent are further included.

For example, while such an example that the inclination sensor detects only any of the stood state where the user uses the portable information display terminal while standing the frame and the liquid crystal display portion on the placing surface, the laid-down state where the user uses the portable information display terminal while laying down the frame and the liquid crystal display portion on the placing surface, the hand-held state where the user uses the portable information display terminal while manually grasping the frame and the state (unused state) where the user turns down the portable information display terminal so that the frame and the liquid crystal display portion are opposed to the placing surface has been shown in each of the aforementioned first and second embodiments, the present invention is not restricted to this. The detection sensor may detect a state other than the stood state, the laid-down state, the hand-held state and the turned-down state (unused state) such as that where the user uses the portable information display terminal while hanging the same on a wall surface, in addition to the laid-down state, the hand-held state and the turned-down state (unused state), for example.

While the example of shifting the portable information display terminal to the standby mode in the case where the user turns down the portable information display terminal to be opposed to the placing surface has been shown in each of the aforementioned first and second embodiments, the present invention is not restricted to this. The portable information display terminal may be shifted to the standby mode in a state other than the state (unused state) where the user turns down the portable information display terminal to be opposed to the placing surface such that the user shifts the portable information display terminal in the stood state where the user uses the portable information display terminal while standing the frame and the liquid crystal display portion on the placing surface, for example.

While such an example that the inclination sensor forms the frame in the outer shape placeable in the stood state where the user uses the portable information display terminal while standing the frame and the liquid crystal display portion on the placing surface and the laid-down state where the user uses the portable information display terminal while laying down the frame and the liquid crystal display portion on the placing surface has been shown in each of the aforementioned first and second embodiments, the present invention is not restricted to this. A stand or the like of a separate member may be so mounted on the frame (housing) that the inclination sensor places the frame in the stood state where the user uses the portable information display terminal while standing the frame and the liquid crystal display portion on the placing surface and the laid-down state where the user uses the portable information display terminal while laying down the frame and the liquid crystal display portion on the placing surface.

While the example of performing remote control of the control object apparatus by emitting the infrared rays including the remote control signal to the control object apparatus in the remote control mode has been shown in each of the aforementioned first and second embodiments, the present invention is not restricted to this. The control object apparatus may be remote-controlled by employing a wireless communication standard such as Bluetooth (registered trademark) or Zigbee (registered trademark), for example.

While processing operations of the control portion have been described by employing the flow charts described in an event-driven manner in starting and described in a flow-driven manner as to processing operations after the starting for the convenience of illustration in the aforementioned first embodiment, the present invention is not restricted to this. The processing operations may be performed in a complete event-driven manner, in a complete flow-driven manner, or in a parallel processing manner.

While the example of shifting the television set to the standby mode in the case of turning down the portable information display terminal to be opposed to the placing surface has been shown in the aforementioned second embodiment, the present invention is not restricted to this. An external apparatus other than the (television set may be shifted to a standby mode in the case of turning down the portable information display terminal to be opposed to the placing surface, so far as the same is an external apparatus remote-controllable in the remote control mode of the portable information display terminal.

## Claims

1. A portable information display terminal (1) comprising:
a housing (20);
an inclination sensor (53) for detecting that the portable information display terminal has entered a first state or that the portable information display terminal has entered a second state by detecting an inclination of said housing; and
a control portion (51, 151) determining and specifying that the portable information display terminal is in said second state and performing control of shifting to a standby mode in a case where it is detected by said inclination sensor that the portable information display terminal is in said second state.

2. The portable information display terminal according to claim 1, wherein
said control portion is formed to determine and specify that the portable information display terminal is in said first state and to perform control of not shifting to said standby mode in a case where it is detected by said inclination sensor that the portable information display terminal is in said first state.

3. The portable information display terminal according to claim 1, further comprising a display portion displaying information, wherein
said second state is a state turning down the portable information display terminal so that said housing and said display portion are opposed to a placing surface, and
said control portion is formed to perform control of shifting to said standby mode in a case where it is detected by said inclination sensor that the portable information, display terminal is in the state turned down the portable information display terminal so that said housing and said display portion are opposed to said placing surface.

4. The portable information display terminal according to claim 1, wherein
said inclination sensor is formed to detect a third state which is a state where said housing is grasped by the user in addition to said first state and said second state, and
said control portion is formed to perform control of not shifting to said standby mode in a case where it is detected by said inclination sensor that the portable information display terminal is in said third state where said housing is grasped by the user also in a case where an inclination corresponding to said second state is detected.

5. The portable information display terminal according to claim 4, further comprising a storage portion storing an inclination angle detected by said inclination sensor, wherein
said control portion is formed to determine and specify that the portable information display terminal is in said first state or said second state and to determine that the portable information display terminal is in said third state where said housing is grasped by the user by comparing an inclination angle, stored in said storage portion, before the attitude of said housing is changed and an inclination angle, stored in said storage portion, after the attitude of said housing is changed with each other.

6. The portable information display terminal according to claim 5, further comprising a display portion (10) displaying information, wherein
said second state is a state turning down the portable information display terminal so that said housing and said display portion are opposed to a placing surface, and
said control portion is formed to determine and specify that the portable information display terminal is in said second state in a case where said inclination angle detected by said inclination sensor does not change with time in said prescribed range.

7. The portable information display terminal according to claim 6, wherein
said control portion is formed to determine that the portable information display terminal is in said third state and to perform control of not shifting to said standby mode in a case where said inclination angle detected by said inclination sensor in an angle range corresponding to said second state changes with time in the prescribed range, also when said inclination angle detected by said inclination sensor is in the angle range corresponding to said second state.

8. The portable information display terminal according to claim 1, wherein
said first state and said second state are states where said housing is placed on a placing surface,
said first state includes a vertically placed use state where the user uses the portable information display terminal while standing said housing and a laid-down use state where the user uses the portable information display terminal while laying down said housing,
said housing is formed to be placeable on said placing surface so that an inclination of said housing in said vertically placed use state, an inclination of said housing in said laid-down use state and an inclination of said housing in said second state become inclinations different from each other, and
the portable information display terminal is formed to perform control of shifting to said standby mode with said control portion in a case where the inclination of said housing in said second state is detected by said inclination sensor.

9. The portable information display terminal according to claim 8, further comprising a display portion displaying information, wherein
said second state is a state turning down the portable information display terminal so that said housing and said display portion are opposed to said placing surface, and
said housing is formed to have an outer shape placeable on said placing surface so that an inclination in said vertically placed use state, an inclination in said laid-down use state and an inclination in said turned-down state become inclinations different from each other.

10. The portable information display terminal according to claim 9, wherein
said housing is so formed that at least either the inclination in said vertically placed use state and the inclination in said turned-down state or the inclination in said laid-down use state and the inclination in said turned-down state are relatively different from each other by at least 90 degrees, and
said control portion is formed to be capable of determining and specifying said first state and said second state on the basis of the inclinations, different from each other by at least said 90 degrees, of said housing, i.e. at least either the inclination in said vertically placed use state and the inclination in said turned-down state or the inclination in said laid-down use state and the inclination in said turned-down state based on the outer shape of said housing acquired by said inclination sensor.

11. The portable information display terminal according to claim 9, wherein
the inclination in said laid-down use state and the inclination in said turned-down state are relatively different from each other by substantially 180 degrees, and
said control portion is formed to be capable of determining and specifying that the portable information display terminal is in said second state on the basis of the inclinations, different from each other by substantially said 180 degrees, i.e. the inclination in said laid-down use state and the inclination in said turned-down state based on the outer shape of said housing acquired by said inclination sensor.

12. The portable information display terminal according to claim 1, wherein
said first state is a state where the user uses said portable information display terminal, and
said control portion is formed to start an application program corresponding to the detected state in a case where it is detected by said inclination sensor that the portable information display terminal has entered said first state, and formed to perform control of shifting to said standby mode without starting the application program in a case where it is detected by said inclination sensor that the portable information display terminal is in said second state.

13. The portable information display terminal according to claim 12, further comprising a communication portion (31, 32) used at a time of a remote control mode, wherein
said first state includes a laid-down use state where the user uses the portable information display terminal while laying down said housing on a placing surface, and
said control portion is formed to start an application program corresponding to said remote control mode in a case where it is detected by said inclination sensor that the portable information display terminal is in said laid-down use state.

14. The portable information display terminal according to claim 12, wherein
said inclination sensor is formed to detect a third state which is a state where said housing is grasped by the user in addition to said first state and said second state, and
said control portion is formed to start the application program corresponding to the detected state also in a case of specifying that the portable information display terminal is in said third state in addition to a case of said laid-down use state as said first state.

15. The portable information display terminal according to claim 12, further comprising a display portion (10) displaying information, wherein
said first state includes a vertically placed use state where the user uses the portable information display terminal while standing said housing, and
said control portion is formed to start an application program so formed that said user is capable of browsing the information displayed on said display portion in a state not operating the portable information display terminal in a case where it is detected by said inclination sensor that the portable information display terminal is in said vertically placed use state.

16. The portable information display terminal according to claim 1, further comprising a communication portion (31, 32) used at a time of a remote control mode, wherein
said control portion is formed to shift said portable information display terminal to said standby mode and to transmit a signal instructing an apparatus which is an operation object in said remote control mode to shift to the standby mode through said communication portion at a time when it is detected by said inclination sensor that the portable information display terminal has entered said second state in a case where the portable information display terminal is used in said remote control mode.

17. The portable information display terminal according to claim 16, wherein
said control portion is formed to transmit said signal instructing the apparatus which is the operation object in said remote control mode to shift to said standby mode after said portable information display terminal shifts to said standby mode.

18. The portable information display terminal according to claim 1, wherein
said inclination sensor is formed to detect a third state which is a state where said housing is grasped by the user in addition said first state and said second state, and
said control portion is formed to perform control of maintaining a function of detecting said first state, said second state and said third state with said inclination sensor when shifting to said standby mode.

19. The portable information display terminal according to claim 18, further comprising a storage portion storing a use history of application programs started in said first state and said third state, wherein
said control portion is formed to decide and start an application program corresponding to said first state or said third state on the basis of said use history stored in said storage portion in a case of returning from said standby mode on the basis of the inclination of said housing detected by said inclination sensor after shifting to said standby, mode.

20. The portable information display terminal according to claim 1, further comprising a power supply switch (38), wherein
said control portion is formed to perform control of returning from said standby mode in a case of determining that said power supply switch has been pressed down, also in a state where it is detected by said inclination sensor that the portable information display terminal is in said second state and the portable information display terminal is shifted to said standby mode.
